# EUROPÄISCHE PATENTSCHRIFT

(11) **EP 2 135 349 B1**
(45) Veröffentlichungstag und Bekanntmachung des Hinweises auf die Patenterteilung: **03.11.2010**
(21) Anmeldenummer: 08715905.9
(22) Anmeldetag: 21.02.2008
(51) Int. Cl.: H02P 9/00, F03D 7/02, F03D 9/00, H02J 3/18, H02J 3/38, H02J 9/06

(54) **VERFAHREN ZUM BETREIBEN EINER WINDENERGIEANLAGE BEI ÜBERSPANNUNGEN IM NETZ**
METHOD FOR OPERATING A WIND ENERGY SYSTEM IN CASE OF OVERVOLTAGES IN THE GRID
PROCÉDÉ POUR FAIRE FONCTIONNER UNE CENTRALE ÉOLIENNE EN CAS DE SURTENSIONS DANS LE RÉSEAU

(30) Priorität: 13.04.2007 DE 102007017870
(43) Veröffentlichungstag der Anmeldung: 23.12.2009
(60) Teilanmeldung: 10162409.6
(73) Patentinhaber: REpower Systems AG, 22297 Hamburg (DE)
(72) Erfinder: FORTMANN, Jens, 13156 Berlin (DE); LETAS, Heinz-Hermann, 23701 Süsel/Gross Meinsdorf (DE)
(74) Vertreter: Seemann, Ralph
(86) Internationale Anmeldenummer: PCT/EP2008/001337
(87) Internationale Veröffentlichungsnummer: WO 2008/125163

(56) Entgegenhaltungen:
- EP-A- 1 752 660
- WO-A-01/25630
- WO-A-2006/120033
- US-A1- 2005 090 937
- US-A1- 2007 052 244

## Beschreibung

Die Erfindung betrifft ein Verfahren zum Betreiben einer Windenergieanlage mit einem von einem Rotor angetriebenen elektrischen Generator zum Abgeben elektrischer Leistung an ein elektrisches Netz, das eine Netzspannung vorsieht, wobei bei Vorherrschen einer Überspannung im Netz Blindleistung von der Windenergieanlage in das Netz eingespeist wird, um die Spannung zu senken.

Die Erfindung betrifft ferner eine Windenergieanlage mit einem von einem Rotor angetriebenen elektrischen Generator zum Abgeben elektrischer Leistung an ein elektrisches Netz, wobei bei Vorherrschen einer Überspannung im Netz Blindleistung von der Windenergieanlage in das Netz einspeisbar ist, um die Spannung zu senken.

Aus DE 10 2004 048 339 A1 ist eine Windenergieanlage mit einem Rotor, einem dadurch angetriebenen Generator mit einem Umrichter zur Einspeisung elektrischer Energie über einen Verknüpfungspunkt in ein elektrisches Versorgungsnetz und einer Steuereinrichtung bekannt, wobei die Steuereinrichtung eine Umrichtersteuerung aufweist. Hierbei ist vorgesehen, dass die Steuereinrichtung einen Eingangsanschluss für einen Sollwert der abzugebenden Spannung aufweist, wobei ein Zusatzregler vorgesehen ist, an dessen Eingang die Sollspannung angelegt ist und an dessen Ausgang Blindleistungssollwerte ausgegeben und an die Umrichtersteuerung angelegt sind, wobei der Zusatzregler dazu ausgebildet ist, aus dem Signal für die Sollspannung Blindleistungssollwerte zu berechnen, die tatsächlich abgegebene Spannung der Windenergieanlage mit Hilfe eines Sensors zu erfassen und nach Vergleich mit der Sollspannung die Blindleistungssollwerte zu korrigieren. Hierbei wird somit die Einstellung eines gewünschten Leistungskoeffizienten mit einem Spannungshalteverfahren verknüpft. Dies ermöglicht eine volle Ausnutzung des Blindleistungspotentials der Windenergieanlage, ohne dass es zu Schäden durch eine übermäßig ansteigende Spannung kommt. Diese Regelung hat ferner den Vorteil, dass sie bei impulsartigen Spannungstransienten ein robustes Verhalten der Windenergieanlage ermöglicht.

Aus EP 1 386 078 B1 sind eine Windenergieanlage und ein Verfahren zum Betreiben einer Windenergieanlage bekannt, wobei Blindleistung von der Windenergieanlage in das elektrische Netz eingespeist wird und die Blindleistung durch einen Phasenwinkel phi vorgegeben wird, welcher einen Winkel zwischen dem Strom und der Spannung der eingespeisten elektrischen Leistung beschreibt, wobei der Phasenwinkel mithin den Blindleistungsanteil der von der Windenergieanlage abgegebenen Leistung bestimmt, wobei der Phasenwinkel phi in Abhängigkeit vom Betrag von wenigstens einer im Netz erfassten Spannung verändert wird, wobei der Phasenwinkel unverändert ist, solange die Netzspannung zwischen einem vorbestimmten unteren Sollwert und einem vorbestimmten oberen Sollwert liegt, wobei der untere Spannungswert geringer ist als ein Sollspannungswert und der vorbestimmte obere Spannungswert größer ist als ein vorbestimmter Sollspannungswert und wobei bei Überschreiten des vorbestimmten oberen Spannungswertes oder bei Unterschreiten des vorbestimmten unteren Spannungswertes der Betrag des Phasenwinkels mit weiter ansteigender oder sinkender Spannung ansteigt.

US 2007/0052244 A1 offenbart eine Windenergieanlage in einer bestimmten elektrischen Konfiguration. Es wird eine doppelt gespeiste Asynchronmaschine gesteuert. Hierbei wird beispielsweise über eine Rampenfunktion in Abhängigkeit der Istspannung im Verhältnis zur Sollspannung eine Blindleistung ausgegeben. Die Blindleistung wird hierbei bei Unterspannung (SAG-Voltage) variiert. In einem weiteren Ausführungsbeispiel aus diesem Dokument, das im Zusammenhang mit Fig. 13 gezeigt ist, wird beschrieben, wie ein Spannungseinbruch erkannt wird. Ist die Netzspannung geringer als eine Vergleichsspannung, wird ein Zähler gestartet, der drei Zyklen abwartet, ob der Spannungseinbruch noch besteht und bei Fortbestehen ein Spannungseinbruchsbit setzt. Im weiteren Verlauf wird abgewartet, ob die Spannung wieder höher als eine Vergleichsspannung ist, und sofern die Spannung höher ist, wird ein zweiter Zähler gestartet, der zehn Zyklen abwartet, ob die Spannung stabil oberhalb der Vergleichsspannung bleibt, bevor das Spannungseinbruchsbit wieder zurückgesetzt wird und die Störung somit beendet wird.

EP 1 752 660 A1 beschreibt einen Überspannungsschutz einer Windenergieanlage und ein entsprechendes Verfahren zum Betrieb der Windenergieanlage, wobei eine erste Versorgungslinie eines Leistungsnetzes vorgesehen ist, wobei die Spannung der ersten Leistungslinie detektiert wird und ein erster Stromweg zu dieser ersten Linie verbunden wird, falls die erste Spannung einen vorbestimmten ersten Spannungsgrenzwert überschreitet.

Es ist Aufgabe der vorliegenden Erfindung, ein sicheres Verfahren zum Betreiben einer Windenergieanlage anzugeben, die bei Überspannung im Netz später als üblich eine Trennung der Windenergieanlage vom Netz vorsieht, wobei die elektrotechnischen bzw. elektrischen Komponenten der Windenergieanlage wirksam geschützt werden.

Gelöst wird diese Aufgabe durch ein Verfahren nach Anspruch 1 zum Betreiben einer Windenergieanlage mit einem von einem Rotor angetriebenen elektrischen Generator zum Abgeben elektrischer Leistung an ein elektrisches Netz, das eine Netzspannung vorsieht, wobei bei Vorherrschen einer Überspannung im Netz Blindleistung von der Windenergieanlage in das Netz eingespeist wird, um eine Spannung zu senken, wobei überwacht wird, ob innerhalb einer vorgebbaren Zeit die Spannung auf einen vorgebbaren Sollwert gesenkt wurde und/oder ein Blindstrom abgegeben wird, der größer oder gleich einem vorgebbaren Blindstromsollwert ist, wobei eine erste Grenzfunktion von vorgegebenen Spannungssollwerten in Abhängigkeit der Zeit und/oder eine zweite Grenzfunktion von vorgegebenen induktiven Blindstromsollwerten in Abhängigkeit der Zeit vorgesehen ist.

Unter der einen Spannung wird eine Spannung verstanden, die zwischen einem Verknüpfungspunkt der Windenergieanlage bzw. einem Windenergieanlagenpark an das Netz und einer Windenergieanlage, beispielsweise dem Generator einer Windenergieanlage in der Gondel, vorliegt. Vorzugsweise ist eine Spannung auf der Niederspannungsseite eines Transformators einer Windenergieanlage oder eines Windenergieanlagenparks gemeint.

Vorzugsweise wird erst bei Überschreiten eines vorgebbaren Überspannungsbereichs Blindleistung in das Netz eingespeist. Die elektrischen Komponenten bzw. Geräte einer Windenergieanlage bzw. eines Windenergieanlagenparks sind üblicherweise so ausgelegt, dass sie einen gewissen Bereich von Überspannungen, beispielsweise 10 % Überspannung, also eine Netzspannung von 110 % auch über einen längeren Zeitraum unbeschadet überstehen können. Eine Überwachung, ob die Spannung auf einen vorgebbaren Sollwert gesenkt wurde, oder ein entsprechender Blindstrom abgegeben wird, der größer oder gleich einem vorgebbaren Blindstromsollwert ist, kann somit davon abhängig gemacht werden, ob ein entsprechender Überspannungsbereich überschritten wurde. Beispielsweise kann ein kritisches Überschreiten vorliegen, wenn eine Überspannung von 20 % für mehr als 20 ms vorliegt. Grundsätzlich kann die Überwachung beispielsweise beginnen, wenn eine kritische Überspannung erreicht ist, beispielsweise über 110 % der Nennspannung. Der Beginn der Überwachung kann auch zeitabhängig sein.

Vorzugsweise wird für den Fall, dass der vorgebbare Spannungssollwert und/oder der vorgebbare Blindstromsollwert nicht erreicht wurde, ein Signal zur Trennung der Windenergieanlage vom Netz ausgelöst, um so die elektrischen Komponenten der Windenergieanlage bzw. des Windenergieanlagenparks vor Schädigungen zu schützen. Durch die Erfindung werden also ein Verfahren und eine Windenergieanlage mit einer Regelung zum Durchfahren von zeitweiligen Überspannungen, die auch als "High Voltage Right Through" bezeichnet werden können, ermöglicht. Hierdurch werden Spannungsbeanspruchungen der Komponenten einer Windenergieanlage bzw. eines Windenergieanlagenparks reduziert. Insbesondere kann eine Windenergieanlage bzw. ein Windenergieanlagenpark durch das erfindungsgemäße Verfahren länger am Netz verbleiben und ein Schutz aller Komponenten vor Überspannung ist gewährleistet. Ferner ist nur eine geringfügige kostengünstige Anpassung von Komponenten notwendig.

Erfindungsgemäß ist eine erste Grenzfunktion von vorgegebenen Spannungssollwerten in Abhängigkeit der Zeit und/oder eine zweite Grenzfunktion von vorgegebenen induktiven Blindstromsollwerten in Abhängigkeit der Zeit vorgesehen. Es kann somit nicht nur ein Spannungssollwert vorgesehen sein, sondern eine Vielzahl von Spannungssollwerten bzw. eine Vielzahl von Blindstromsollwerten, die sich in Abhängigkeit der Zeit ändern können. So kann es beispielsweise sein, dass elektrische Komponenten der Windenergieanlage über einen bestimmten Zeitraum eine relativ hohe Überspannung vertragen können, dann allerdings die Überspannung deutlich reduziert werden muss, um eine Schädigung der Komponenten zu vermeiden. Aus diesem Grund können sich dann die Spannungssollwerte zeitabhängig ändern.

Vorzugsweise wird so lange kein Signal zur Trennung der Windenergieanlage vom Netz ausgelöst, wie die Spannung unterhalb der ersten Grenzfunktion bleibt und/oder der Blindstrom oberhalb der zweiten Grenzfunktion bleibt.

Ferner vorzugsweise ist eine Spannungsregelung und/oder Blindstromregelung vorgesehen, so dass eine relativ schnelle Einregelung der Sollwerte ermöglicht ist. Hierzu kann beispielsweise eine PID-Regelung Verwendung finden oder eine PD-Regelung, um eine schnellere Einregelung zu ermöglichen. Alternativ kann auch ein kleiner induktiver Anteil in einer PID-Regelung vorgesehen sein.

Besonders bevorzugt ist es, wenn der Zeitpunkt des Auslösens des Signals der Trennung der Windenergieanlage vom Netz abhängig von einer Reaktionszeit eines Trennschalters ist, um so ausreichend rechtzeitig vor Erreichen eines kritischen Zustandes für die Komponenten der Windenergieanlage oder des Windenergieanlagenparks eine Trennung vom Netz zu ermöglichen, so dass in der Zeit der Trennung, so lange noch eine entsprechende Überspannung an den Komponenten anliegt, die Komponenten nicht geschädigt werden.

Wenn vorzugsweise die Überwachung fortgeführt wird, wenn der vorgebbare Spannungssollwert und/oder der vorgebbare Blindstromsollwert erreicht wurde und insbesondere wenn eine Nennspannung im Netz vorherrscht, ist ein weiterer sicherer Betrieb der Windenergieanlage möglich. Vorzugsweise wird über die vorgebbare Zeit hinaus weiter Blindleistung in das Netz eingespeist, bis die Spannung einen weiteren vorgebbaren Wert erreicht. Wenn bei Erreichen des weiteren vorgebbaren Wertes der Spannung die Blindleistungsabgabe derart reduziert wird, dass der weitere vorgebbare Wert der Spannung nicht überschritten wird, wird dem Problem Rechnung getragen, dass die Windenergieanlage durch die gesenkte Spannung an sich nicht mehr detektieren kann, ob die Überspannung im Netz beendet ist. Dieses rührt daher, dass die Spannung nach erfolgreicher Blindstromeinspeisung in einem normalen Spannungsband für das Netz liegt und die Anlage keine Überspannung mehr misst. Es muss nun also abgewartet werden, bis die Spannung weiter sinkt, ggf. auch unter ein erlaubtes Spannungsband bzw. unter einen weiteren vorgebbaren Spannungswert, worauf dann die Blindstromeinspeisung beendet werden kann bzw. die Blindleistungseinspeisung. Die Blindstromeinspeisung bzw. die Blindleistungseinspeisung sollte dabei vorzugsweise nicht plötzlich abgestellt werden, sondern so erfolgen, dass eine erneute Überspannung vermieden wird, was durch die bevorzugte Maßnahme gewährleistet ist.

Vorzugsweise führt wenigstens eine elektrische Komponente der Windenergieanlage und/oder eines Windparks bei einer vorgebbaren Übersprechspannung einer Überspannung des Netzes keine Schalthandlungen durch bzw. stellt Schalthandlungen ein. Hierdurch werden weitgehend Schäden der Windenergieanlage vermieden. Unter Übersprechspannung ist im Rahmen der Erfindung insbesondere eine Überspannung zu verstehen, die durch die Überspannung im Netz hervorgerufen wird. Besonders bevorzugt ist es, wenn wenigstens eine elektrische Komponente der Windenergieanlage einer vorgebbaren Übersprechspannung einer Überspannung des Netzes auch nicht kurzzeitig ausgesetzt werden darf und/oder wenigstens eine elektrische Komponente, die einen Schaltvorgang vornimmt und für die Überspannung oder Übersprechspannung nicht ausgelegt ist, von einer unterbrechungsfreien Stromversorgung versorgt wird. Durch Verwendung einer an sich bekannten unterbrechungsfreien Stromversorgung, die den empfindlichen elektrischen Komponenten vorgeschaltet ist und dafür sorgt, dass keine Überspannung bzw. Übersprechspannung einer Überspannung des Netzes auf die empfindlichen elektrischen Komponenten gelangt, ist ein besonders effizienter Schutz dieser empfindlichen Komponenten möglich, wobei die weiteren Komponenten, die nicht so empfindlich sind, keine unterbrechungsfreie Stromversorgung benötigen. Bei Vorhandensein einer Übersprechspannung einer Überspannung des Netzes am Eingang der unterbrechungsfreien Stromversorgung schaltet diese das Durchleiten der Spannung ab und auf Akkumulatorbetrieb, um die empfindlichen Komponenten weiter mit Spannung bzw. Leistung zu versorgen.

Vorzugsweise wird das erfindungsgemäße Verfahren für eine maximal vorgebbare Zeitdauer durchgeführt. Danach wird das Verfahren beendet und insbesondere bei weiter vorliegender Überspannung der Windpark bzw. die Windenergieanlage vom Netz getrennt. Vorzugsweise ist ein Verfahren zum Betreiben eines Windenergieanlagenparks mit wenigstens zwei Windenergieanlagen vorgesehen, wobei ein erfindungsgemäßes Verfahren, das vorstehend beschrieben wurde, verwendet wird.

Vorzugsweise steuert eine Parkregelung eine Parkblindstromquelle, womit zusätzlich zu der jeweiligen Blindleistung der Windenergieanlagen weiter Blindleistung zur Verfügung gestellt werden kann. Die gewünschte Spannungsabsenkung wird so über die Steuerung bzw. Regelung einer von den Windenergieanlagen beabstandeten Blindstromquelle unterstützt. Die weitere Blindstromquelle bzw. Parkblindstromquelle kann ein Phasenschieber oder eine Kondensatorbank sein.

Die Aufgabe wird ferner durch eine Windenergieanlage nach Anspruch 9 mit einem von einem Rotor angetriebenen elektrischen Generator zum Abgeben elektrischer Leistung an ein elektrisches Netz gelöst, wobei bei Vorherrschen einer Überspannung im N,etz Blindleistung von der Windenergieanlage in das Netz eingespeist wird um eine Spannung zu senken, wobei eine Überwachungsvorrichtung vorgesehen ist, die ausgebildet ist, um zu überwachen, ob innerhalb einer vorgebbaren Zeit die Spannung auf einen vorgebbaren Sollwert gesenkt wurde und/oder ein Blindstrom abgegeben wird, der größer oder gleich einem vorgebbaren Blindstromsollwert ist, wobei eine erste Grenzfunktion zum vorgegebenen Spannungssollwert in Abhängigkeit der Zeit und/oder eine zweite Grenzfunktion von vorgegebenen induktiven Blindstromsollwerten in Abhängigkeit der Zeit vorgesehen ist.

Vorzugsweise ist die Überwachungsvorrichtung derart ausgebildet, dass erst bei Überschreiten eines vorgebbaren Überspannungsbereichs Blindleistung in das Netz eingespeist wird. Unter vorgebbarem Überspannungsbereich wird im Rahmen der Erfindung insbesondere verstanden, dass eine Funktion der Überspannung in Abhängigkeit der Zeit vorgesehen ist, oberhalb derer dann eben die Blindleistung in das Netz eingespeist wird. Vorzugsweise löst die Überwachungsvorrichtung ein Signal zur Trennung der Windenergieanlage vom Netz aus, sofern der vorgebbare Spannungssollwert und/oder der vorgebbare Blindstromsollwert nicht erreicht wurde. Vorzugsweise ist ferner eine Regelvorrichtung vorgesehen, mit der eine Spannungsregelung und/oder eine Blindstromregelung ermöglicht ist. Hierbei handelt es sich wie vorstehend schon beschrieben, vorzugsweise um eine PID-Regelvorrichtung oder PD-Regelvorrichtung bzw. eine PID-Regelvorrichtung mit einem geringen Integralteil.

Besonders einfach ist die erfindungsgemäße Windenergieanlage zu realisieren, wenn ein Umrichter oder ein Umrichter- und Generatorsystem vorgesehen ist, der oder das zum Absenken der Spannung einen Blindstrom in das Netz einspeist. Vorzugsweise ist eine unterbrechungsfreie Stromversorgung (USV) vorgesehen, die wenigstens ein empfindliches elektrisches Gerät oder eine empfindliche elektrische Komponente der Windenergieanlage vor Überspannung schützt.

Ferner ist vorzugsweise der Rotorkreis und/oder Statorkreis mit einem für Überspannungen ausgelegten Leistungsschalter oder Schütz ausgebildet. Besonders bevorzugt ist es, wenn getrennte Schalter für Rotorkreis und Statorkreis vorgesehen sind, so dass diese auch getrennt geschaltet werden können. Vorzugsweise ist der Generator ein doppelt gespeister Asynchrongenerator. Es kann auch ein Asynchrongenerator oder Synchrongenerator vorgesehen sein, der die gesamte Leistung über einen Umrichter in das Netz einspeist. Es kann ferner ein Asynchrongenerator vorgesehen sein, der direkt mit dem Netz gekoppelt ist, wobei in der Windenergieanlage oder in dem Windpark eine Vorrichtung, wie beispielsweise jeweils ein oder mehrere Umrichter oder schaltbare Induktivitäten, vorgesehen ist, die ausgestaltet ist, um die Blindleistung der Windenergieanlage und/oder des Windparks zu ändern. Ferner vorzugsweise ist der Umrichter ein Zwischenkreisumrichter, wobei insbesondere vorzugsweise der Zwischenkreisumrichter wenigstens einen schaltbaren Widerstand in einem Zwischenkreis und/oder an einer elektrischen Verbindung zum Generator aufweist und der Widerstand aktiviert wird, wenn die Leistung, die anliegende Spannung und/oder der Strom, der den Umrichter durchfließt, einen jeweils vorgebbaren Grenzwert erreicht. Die Widerstände sind hierbei vorzugsweise Leistungswiderstände, die dazu ausgelegt sind, bei Störungen die Leistung des Generators aufzunehmen, um den Umrichter zu schützen.

Vorzugsweise ist ein Windenergieanlagenpark mit wenigstens zwei vorstehend beschriebenen erfindungsgemäßen Windenergieanlagen versehen. Vorzugsweise ist eine von den Windenergieanlagen beabstandete Parkblindstromquelle vorgesehen, die insbesondere von einer Parkregelung gesteuert oder geregelt wird.

Im Rahmen der Erfindung umfasst der Begriff Blindstrom einen zusätzlichen zum an sich in das Netz eingespeisten Blindstrom, wobei der im normalen Betrieb vor der Überspannung eingespeiste Blindstrom eben zu dem in der Erfindung genannten Blindstrom hinzukommt. Im Rahmen der Erfindung kann anstelle der eingespeisten Blindleistung auch ein Blindstrom eingespeist werden, der Phasenwinkel des Blindstromes entsprechend geändert werden oder ein Leistungsfaktor variiert werden, also elektrisch analoge Größen zur Blindleistung, die den Anteil oder die Höhe der abgegebenen Blindleistung beschreiben bzw. definieren, verwendet werden.

Erfindungsgemäß sind ein Verfahren zum Betrieb einer Windenergieanlage sowie eine Windenergieanlage angegeben, die sich selbst überwacht und feststellt, ob eine notwendige Spannungssenkung bei einer Überspannung im Netz rechtzeitig eintritt und ob die Spannungsabsenkung groß genug ist.

Die Erfindung wird nachstehend ohne Beschränkung des allgemeinen Erfindungsgedankens anhand von Ausführungsbeispielen unter Bezugnahme auf die Zeichnungen beschrieben. Bezüglich aller im Text nicht näher erläuterten erfindungsgemäßen Einzelheiten wird ausdrücklich auf die Zeichnungen verwiesen. Es zeigen:
- Fig. 1: eine schematische Darstellung eines Windparks mit Anschluss an das Hochspannungsnetz,
- Fig. 2: eine schematische Darstellung eines Diagramms der relativen Spannung über der Zeit, die Anforderungen von Netzbetreibern an die Fähigkeit von Windenergie- anlagen darstellen,
- Fig. 3: eine schematische Darstellung einer Windenergieanla- ge,
- Fig. 4: eine schematische Darstellung einer Spannungsstatik, also eines Diagramms eines relativen Blindstroms über eine relative Spannung,
- Fig. 5: eine schematische Darstellung von Spannungskurven über der Zeit,
- Fig. 6: eine schematische Darstellung einer Regelungsvorrich- tung einer Windenergieanlage, und
- Fig. 7: eine schematische Darstellung des Blindstroms über der Zeit.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

Bei Windenergieanlagen ist es üblich, dass bei Netzspannungen von 110 % der Nennspannung die Windenergieanlage vom Hochspannungsnetz getrennt wird, um Komponenten der Windenergieanlage zu schützen. Die Überspannungen oder Übersprechspannungen von Überspannungen, die in Windenergieanlagen auftreten, sind meistens das Ergebnis von Ereignissen im Hochspannungsnetz. Dieses kann beispielsweise der Abwurf einer induktiven Last sein.

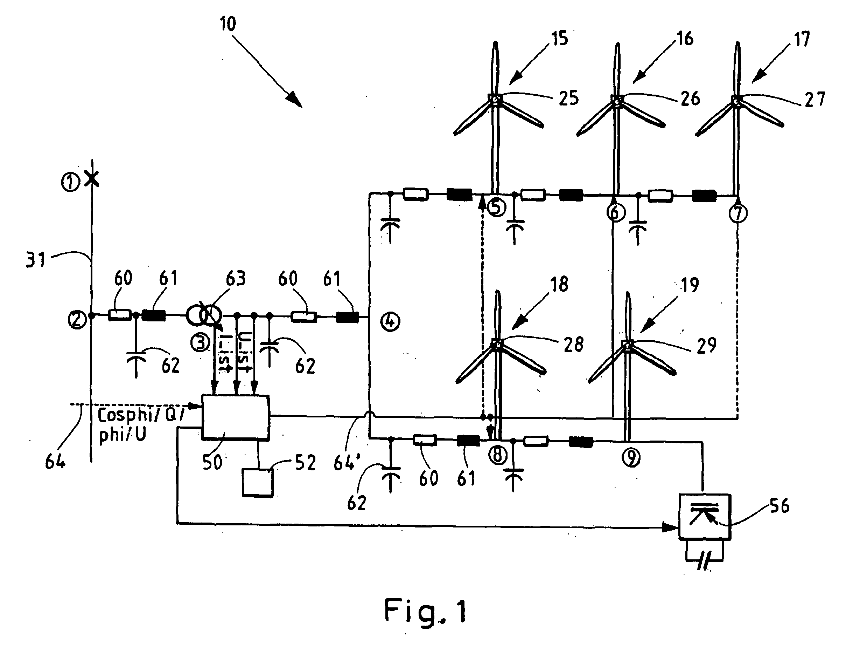

In Fig. 1 ist schematisch ein Windpark 10 mit fünf Windenergieanlagen 15 bist 19 dargestellt, wobei der Windpark 10 an das Netz 31 bzw. Hochspannungsnetz 31 angeschlossen ist. Das spannungsanhebende Ereignis kann beispielsweise am Punkt oder Ort 1 liegen oder Punkt oder Ort 2.

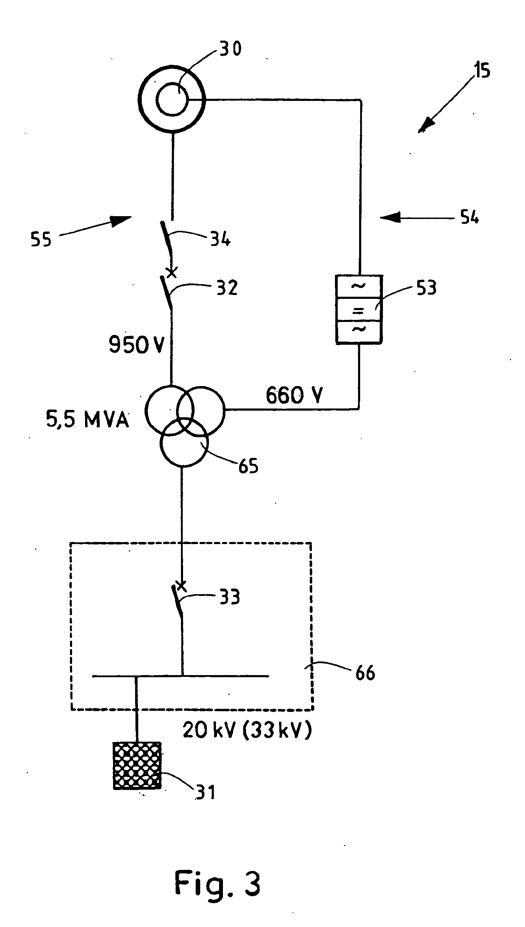

Zwischen dem Fehlerort bzw. dem Ort 1 oder 2, an dem das spannungsanhebende Ereignis stattfindet und den Windenergieanlagen 15 bis 19 bzw. dem Windenergieanlagenpark 10 existieren nun noch eine Reihe von Induktivitäten aufgrund der Zuleitungen, die als eine Art Ersatzschaltbild in Fig. 1 mit 61 gekennzeichnet sind. Die Induktivitäten bzw. Spulen 61 können sowohl die Zuleitungen im Hoch- und Mittelspannungsnetz als auch der Hochspannungstransformator 63, der als Stufentransformator 63 ausgebildet ist, sein. Die Windenergieanlagen 15 bis 19 werden ihrerseits mit einem Transformator 65, der beispielsweise als Zwei-Wicklungs Transformator oder Drei-Wicklungs Transformator ausgebildet sein kann, mit dem Mittelspannungsnetz des Windparks verbunden. In Fig. 3 ist beispielsweise ein Drei-Wicklungs Transformator 65 dargestellt. Typische Werte des Spannungsabfalls über den Transformatoren sind beispielsweise für den Hochspannungstransformator 63 12 %, für den Mittelspannungstransformator 65 6 % bis 10 %. Weitere Spannungsabfälle erfolgen beispielsweise über eine Netzdrossel und den Generator, der beispielsweise in Fig. 3 mit der Bezugsziffer 30 versehen ist. Bei einer Einspeisung von Blindstrom in der Höhe von 50 % oder 100 % können damit Spannungsabsenkungen von 6 % bzw. 12 % über dem Hochspannungstransformator und ca. 3 % bis 5 % bzw. 6 % bis 10 % über dem Mittelspannungstransformator erzielt werden.

Eine Überspannung am Ort 1 führt nun zu erhöhten Spannungen bzw. Übersprechspannungen an den Orten 3 bis 9.

Die Windenergieanlagen 15 bis 19 aus Fig. 1 sind mit entsprechenden Rotoren 25 bis 29 versehen, durch die jeweils ein Generator 30, der beispielsweise in Fig. 3 schematisch dargestellt ist, Strom bzw. Leistung erzeugt. Um die Leitungswiderstände und die Leitungsinduktivitäten dazustellen, sind noch schematisch Widerstände 60 und Kondensatoren 62 in Fig. 1 dargestellt. Mit 64 ist eine Sollwertvorgabe dargestellt, die den Kosinus der Phase phi, die Blindleistung Q, den Phasenwinkel phi selbst und die Spannung für die Parkregelung 50 vorgibt. Diese Werte werden üblicherweise von den Netzbetreibern des Hochspannungsnetzes 31 vorgegeben. Als Eingangsgrößen für die Parkregelung 50 dienen noch die zwischen dem Stufentransformator 63 und den Windenergieanlagen 15 bis 19 abgegriffenen tatsächlichen Strom (I_ist) sowie die tatsächlich vorherrschende Spannung (U_ist). Es ist ferner eine unterbrechungsfreie Stromversorgung 52 (USV) vorgesehen, um empfindliche Komponenten der Parkregelung 50 vor Übersprechspannung bzw. Überspannungen zu schützen.

Es ist ferner eine externe bzw. eine von den Windenergieanlagen 15-19 beabstandete Blindstromquelle 56 bzw. Parkblindstromquelle vorgesehen, die als Phasenschieber ausgebildet sein kann und von der Windparkregelung 50 gesteuert oder geregelt wird.

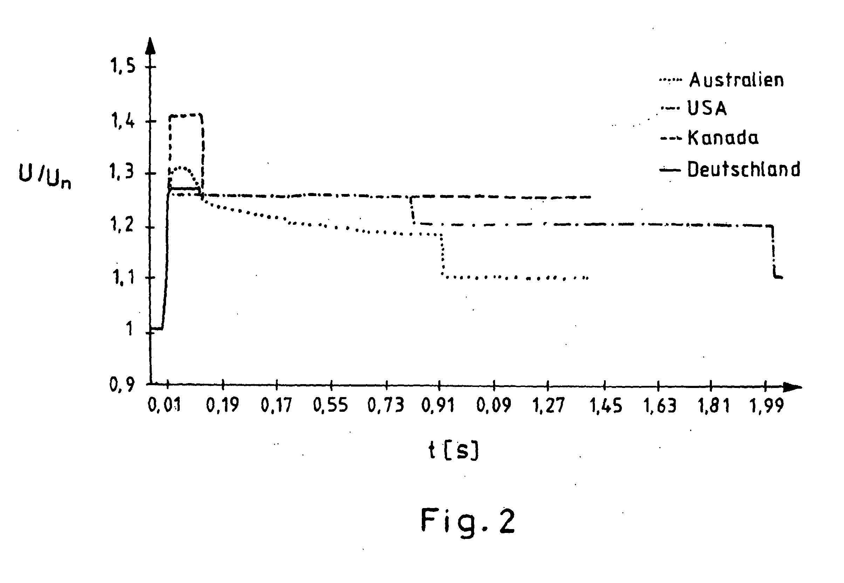

Fig. 2 zeigt eine schematische Darstellung von Anforderungen von Netzbetreibern an die Fähigkeit von Windenergieanlagen, zeitweilige Überspannungen im Netz 31 zu durchfahren.

Aufgrund des immer größeren Anteils von Windenergieanlagen zur Energiebereitstellung in Hochspannungsnetzen wird auch die Forderung der Netzbetreiber größer, eine Stützung des Hochspannungsnetzes 31 durch die Windenergieanlagen bzw. Windenergieanlagenparks zu ermöglichen, und zwar insbesondere bei Überspannung im Hochspannungsnetz 31. Die Forderungen der Netzbetreiber, die in Fig. 2 beispielhaft dargestellt sind, zeigen, dass beispielsweise in Deutschland gefordert ist, über eine Zeit von 0,1 s eine Überspannung von 126 % durchzuhalten, ohne dass eine Trennung vom Netz erfolgt. In Fig. 2 ist dieses schematisch anhand der durchgezogenen Linie dargestellt. Es ist die relative Spannung U im Verhältnis zur Nennspannung Uₙ dargestellt, und zwar in Abhängigkeit der Zeit mit der Einheit Sekunden. In Kanada sind die Anforderungen noch höher. Hier ist über 0,1 s eine Überspannung von 140 % auszuhalten und daraufhin bis zu einem Zeitablauf von 1,4 s nach dem Auftreten des Überspannungsereignisses noch eine Überspannung von 125 %. Dies ist durch die gestrichelte Linie dargestellt. Entsprechend sind die Vorgaben in Australien anders, was durch die punktierte Linie dargestellt ist, und in den Vereinigten Staaten von Amerika noch anders, was durch die strichpunktierte Linie dargestellt ist.

Fig. 3 zeigt schematisch eine Windenergieanlage mit diversen Schaltern 32 bis 34. Ein Generator 30 erzeugt eine entsprechende Spannung von beispielsweise 950 Volt im Statorkreis 55 und 660 Volt im Rotorkreis 54. Es ist ein Umrichter 53 im Rotorkreis 54 vorgesehen. Ein Drei-Wickler Transformator 65 mit einem Leistungsvermögen von 5,5 MVA bzw. 5,5 MW wandelt dieses Spannungen in 20 kV bzw. 33 kV um. Diese Hochspannung wird dann über den Turmfuß 66 dem Netz 31 zur Verfügung gestellt. Es ist ein Leistungsschalter 32 vorgesehen, der rechtzeitig vor dem Erreichen eines kritischen Zustandes, der zu Schädigungen von Komponenten der Windenergieanlage führen kann, die Windenergieanlage 15 vom Netz trennen kann. Entsprechend kann der Schütz 33 im Turmfuß hierzu dienen. Der Schalter 34 ist eine Art Synchronisierungsschalter, der die Windenergieanlage 15 dem Netz zuschaltet, wenn Phasengleichheit zwischen der Netzspannung bzw. dem Netzstrom und der durch die Windenergieanlage zur Verfügung gestellten Spannung bzw. dem entsprechend zur Verfügung gestellten Strom besteht.

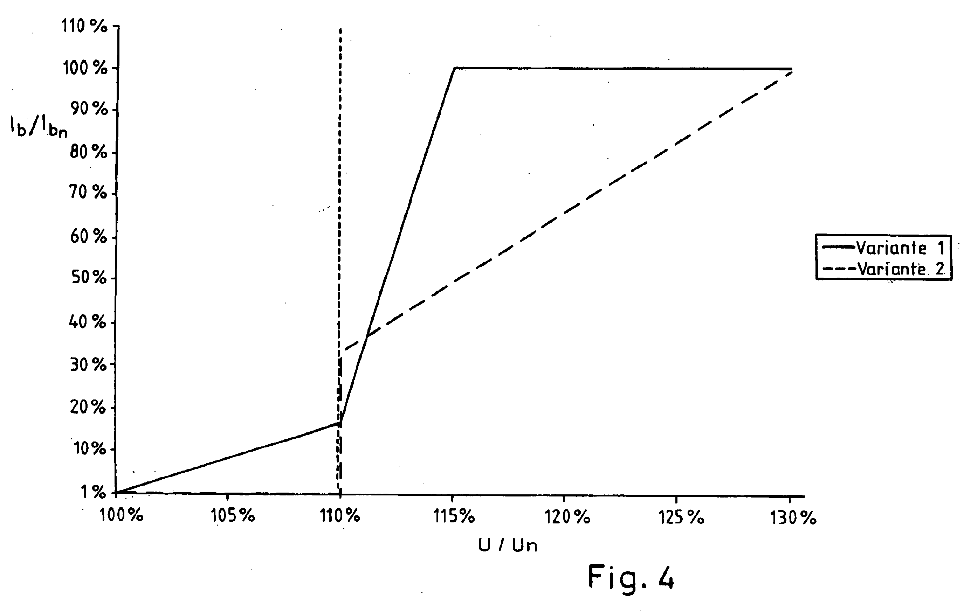

Erfolgt nun im Fall eines Spannungsanstiegs eine Einspeisung induktiver bzw. untererregter Blindleistung, so führt dies zu einem Spannungsabfall über den Induktivitäten der Windenergieanlage bzw. des Windenergieanlagenparks. Damit kann insbesondere im stationären Betrieb die Spannung an den Windenergieanlagen gegenüber der Spannung am Fehlerort gesenkt werden. Insbesondere kann die Übersprechspannung in der Windenergieanlage bzw. im Windenergieanlagenpark gesenkt werden. Ein Beispiel für die Realisierung einer solchen Regelung mit Hilfe einer Spannungsstatik ist in Fig. 4 schematisch dargestellt. Hierbei wird eine Regelung eines Generator-Umrichtersystems oder eines Umrichters an einer Windenergieanlage im Fall einer Überspannung zur Spannungsabsenkung, d.h. zur Einspeisung induktiver bzw. untererregter Blindleistung dargestellt.

Es ist in Fig. 4 ein Diagramm des Blindstroms im Verhältnis zum Nennblindstrom in Abhängigkeit einer relativen Spannung also der tatsächlichen Spannung geteilt durch die Nennspannung dargestellt. Es sind zwei Varianten in Fig. 4 dargestellt, nämlich die erste Variante in einer durchgezogenen Linie und die zweite Variante in einer gestrichenen Linie. Die Variante 1 der Spannungsstatik stellt eine Regelungsalternative dar, bei der in einem normalen Spannungsband, d.h. bei einer Überspannung bis 110 % im Verhältnis zur Nennspannung eine spannungsabhängige Blindleistungsabgabe erfolgt, die einem Spannungsanstieg einer Windenergieanlage entgegenwirkt und bei weiterem Spannungsanstieg über das Spannungsband hinaus, also über 110 % U/Un die Blindleistungseinspeisung stark erhöht wird, wobei relativ schnell der maximale Blindstromwert erreicht wird. Diese Variante wird vorzugsweise verwendet, wenn die Wirkung der Blindleistungsabgabe auf die Spannung klein ist, also bei einem starren Netz oder wenn sichergestellt werden soll, dass auf jeden Fall eine bestimmte bzw. vorgebbare Spannung unterschritten werden soll.

Variante 2 zeigt alternativ eine Regelung, bei der im normalen Spannungsband bis 110 % U/Un nicht durch Änderungen in der Blindleistungsabgabe auf Spannungsänderungen reagiert wird und bei Überschreiten des Spannungsbandes sprunghaft auf einen Wert gesteuert wird, der einer entsprechenden Blindleistungsabgabe entspricht, wobei bei weiterem Spannungsanstieg einer, in diesem Fall linearen Funktion der Statik, die Blindleistungsabgabe erhöht wird. Diese Variante ist vorteilhaft, wenn durch den Sprung bereits eine verträgliche Spannung erreicht wird und die Funktion dann dafür sorgt, dass die steigende Spannung durch höhere Blindleistungsabgabe kompensiert wird. Hierfür sollte die Funktion, mit der die Blindleistungsabgabe steigt, der Wirkung auf die Spannung in etwa entsprechen. Es handelt sich hierbei um ein so genanntes "weiches Netz". Es sind naturgemäß diverse Varianten möglich, insbesondere auch nichtlineare Funktionen in den Bereichen, in denen lineare Funktionen dargestellt sind.

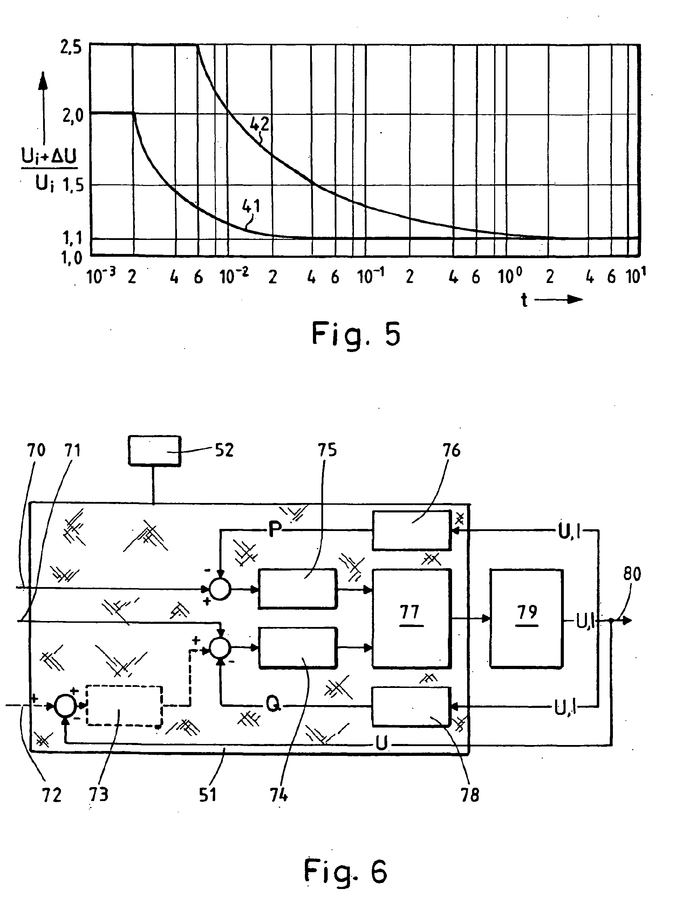

Wenn der Fehler im Hochspannungsnetz 31 bzw. eine Überspannung vorliegt, die über einem vorgebbaren Überspannungswert liegt, bei dem eine Schädigung von Komponenten der Windenergieanlage stattfinden kann, stellt sich nun das Problem, dass neben dem Betrieb der Windenergieanlage, d.h. des Einspeisens von Leistungen in das Netz, auch weiterhin ein ausreichender Schutz gewährt bleiben muss. Um entsprechende elektrische Geräte nicht mit zu hoher Überspannung zu versehen, ist sicherzustellen, dass der in Fig. 5 dargestellte Bereich unterhalb der zweiten Spannungsfunktion 42 für den Betrieb der Windenergieanlage nicht nach oben hin verlassen wird. Fig. 5 zeigt entsprechend eine schematische Darstellung einer Spannungsfunktion über der Zeit, wobei auf der Ordinate (Uᵢ + ΔU)/Uᵢ aufgetragen ist, wobei Uᵢ ein Scheitelwert einer Bemessungsisolationsspannung und Δu eine überlagerte nichtperiodische Spannungsspitze sind.

In dem Bereich unterhalb der zweiten Spannungskurve 42 kann somit eine Windenergieanlage mit Überspannung betrieben werden, sofern keine Schalthandlungen unter Last vorgenommen werden. Um Schalthandlungen unter Last vorzunehmen, muss sichergestellt werden, dass die Windenergieanlage innerhalb des dargestellten Bereichs unterhalb der zweiten Spannungsfunktion 42 vom Netz getrennt wird. Unterhalb der ersten Spannungsfunktion 41 können auch ohne Weiteres unter Last Schalthandlungen vorgenommen werden. Es handelt sich bei Fig. 5 um eine entsprechende Norm für Schaltgeräte (Norm IEC 60439-1).

Es ist gemäß dieser Norm beispielsweise möglich, eine zulässige Überspannung von ca. 140 % ohne Schalthandlungen seitens der Windenergieanlage zu durchfahren, wobei nach einer Sekunde die Überspannung auf ca. 10 % reduziert sein muss, um die elektrischen Bauteile nicht zu überlasten.

Erfindungsgemäß erkennt die Windenergieanlage bzw. eine Überwachungsvorrichtung der Windenergieanlage eine Überspannung und speist entsprechend Blindleistung zur Spannungssenkung ein. Die Spannungssenkung wird überwacht und sofern eine Überschreitung der Grenzlinien bzw. der ersten Spannungsfunktion 41 bzw. zweiten Spannungsfunktion 42 zu befürchten ist, wird die Anlage vom Netz getrennt. Dieses geschieht vorzugsweise unter Berücksichtigung der Reaktionszeit des verwendeten Trennschalters, beispielsweise des Leistungsschalters 32 aus Fig. 3 oder des Schütz 33 aus Fig. 3 und dort auch ggf. unter Last. Da Überspannungen auch länger anstehen können, wenn beispielsweise ein entsprechender Netzfehler vorliegt, und die Trennung der Windenergieanlage beispielsweise mit einer Zeitverzögerung von 40 ms bis 100 ms je nach Schaltertyp von dem Netz geschieht, wäre an sich eine höhere Auslegung der Spannungsfestigkeit der elektrischen Komponenten der Windenergieanlage oder des Windenergieanlagenparks notwendig, da aus Gründen des Schutzes schon zu Beginn des Fehlers ein Signal zur Trennung erfolgen müsste, damit die Windenergieanlage, sofern der Fehler bzw. die Überspannung länger ansteht, auch rechtzeitig getrennt wird.

Hier greift die erfindungsgemäße Lösung an, so dass bei zu hoher Spannung im Netz 31 ein Umrichter bzw. ein Generator-Umrichtersystem mit beispielsweise einer Regelvorrichtung 51, wie diese vereinfacht schematisch in Fig. 6 dargestellt ist, gemäß einer Spannungsstatik gemäß Fig. 4 beispielsweise ein induktiver Blindstrom in das Netz 31 eingespeist wird, um die Spannung in der Windenergieanlage oder im Windenergieanlagenpark zu senken. Es wird dann auch vorzugsweise vorgesehen, dass durch ein Signal der Betriebsführung verhindert wird, dass Komponenten, die direkt von der Spannungserhöhung betroffen sind und die nicht für den Betrieb bei einer höheren Spannung ausgelegt sind, Schaltvorgänge ausführen, die zu einer Beschädigung der Komponenten führen könnten.

Durch eine Überwachung wird geprüft, ob die Regelung schnell genug ist, beispielsweise das innerhalb von 30 ms nach Beginn des Ereignisses bzw. Beginn der Überspannung ein ausreichend hoher Blindstrom geliefert wird, beispielsweise ein Wert von 90 % des Endwertes bzw. ob die Spannung innerhalb dieser Zeit ausreichend auf einen gewünschten Wert gesenkt werden konnte. Eine ausreichende Absenkung kann beispielsweise eine Absenkung auf oder unter einen zulässigen vorgebbaren Wert sein, oder auf einen Wert innerhalb einer zulässigen Spannungs-Zeitfläche.

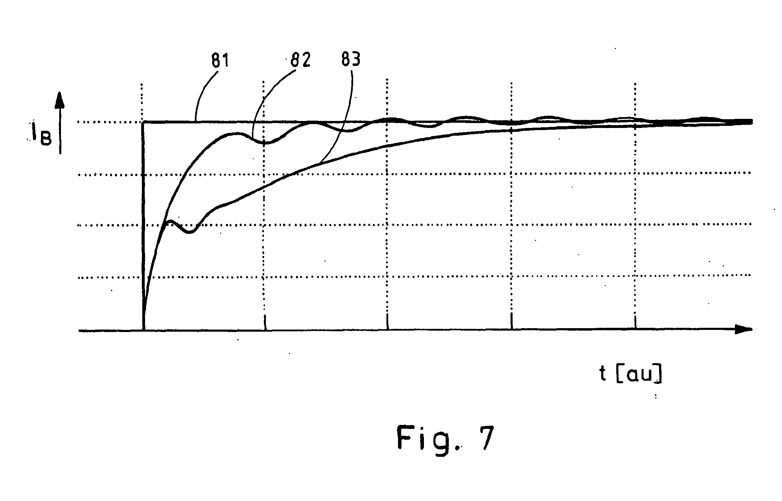

Eine schematische Darstellung einer Regelung eines ausreichend hohen Blindstroms I_{B} ist in Fig. 7 in Abhängigkeit der Zeit in willkürlichen Einheiten (au) dargestellt. Mit 81 ist ein Blindstromsollwert dargestellt. Mit 82 eine erste Blindstromistwertkurve und mit 83 eine zweite Blindstromistwertkurve. Die Einregelung des Blindstroms gemäß der Kurve 82 ist in diesem Ausführungsbeispiel ausreichend, um ausreichend schnell einen ausreichend hohen Blindstrom einzuspeisen. Die Kurve 83 zeigt einen Verlauf, der eine zu langsame Einregelung darstellt, was beispielsweise daran liegen könnte, dass der integrale Teil eines beispielsweise verwendeten PID-Reglers zu groß ist.

Erfolgt keine ausreichende Spannungsabsenkung oder wurde kein ausreichender Strom eingespeist, so muss von einem Fehlverhalten der Windenergieanlage oder von einem ungewöhnlichen Ereignis im Hochspannungsnetz 31 ausgegangen werden. In diesem Fall wird ein Signal zur Trennung der Windenergieanlage vom Netz durch einen vorgelagerten Schalter oder einen Schalter mit ausreichendem Schaltvermögen, wie beispielsweise der Leistungsschalter 32 oder der Schütz 33 ausgelöst, um sicherzustellen, dass noch vor Erreichen einer kritischen Zeit, z.B. 100 ms bei 130 % Nennspannung, eine Netztrennung der Windenergieanlage erfolgt bzw. eine Trennung des Windenergieparks erfolgt und somit die Spannung an den entsprechenden Komponenten wieder im zulässigen Bereich liegt.

Erfolgt eine ausreichende Spannungsabsenkung, so kann die Windenergieanlage bzw. der Windenergieanlagenpark weiter betrieben werden. Trotz eines Fehlers auf der Hochspannungsseite wird die Spannung an der Windenergieanlage und damit für die Komponenten der Windenergieanlage auf zulässige Werte abgesenkt, womit es möglich ist, auch deutlich länger anstehende Fehler bzw. Überspannungen zu durchfahren, beispielsweise 120 % Überspannung für eine Sekunde, als höhere Spannungsverläufe als dieses gemäß der Schaltgerätenorm, d.h. ohne Spannungsabsenkung zulässig wäre. Um die Windenergieanlage bzw. den Windenergieanlagenpark auch weiterhin zu schützen, ist eine weitergeführte Überwachung der Grenzwerte vorgesehen, die eine Abschaltung der Windenergieanlage beim Überschreiten von definierten Spannungen bzw. einer vorgegebenen Spannungskurve bzw. dem Verlassen einer definierten Spannungs-Zeitfläche auslöst. Zusätzlich ist vorgesehen, empfindliche Geräte hinter einer USV 52 anzuordnen, die in der Lage ist, dauerhaft unter Überspannung betrieben zu werden. Die USV kann, sofern sie zwischen Netz 31 und den entsprechenden Komponenten geschaltet ist, wirksam verhindern, dass die Spannungserhöhung weitergeleitet wird. Hierdurch können Komponenten versorgt werden, die auch kurzfristig nicht mit Überspannung betrieben werden dürfen bzw. Komponenten versorgt werden, die während einer Überspannung schalten müssen, dafür aber nicht ausgelegt werden sollen.

Es reicht erfindungsgemäß, wie in Fig. 3 angedeutet ist, einen Leistungsschalter 32 bzw. einen Schutz 33 im Rotorkreis bzw. Netzwechselrichteranschluss bei einer Windenergieanlage mit doppelt gespeistem Asynchrongenerator vorzusehen, sofern getrennte Schalter für Statorkreis und Rotorkreis vorliegen, und sofern der Leistungsschalter und/oder der Schütz im Rotorkreis auf eine Schaltfähigkeit bei höherer Spannung ausgelegt ist.

Fig. 6 zeigt eine schematische Darstellung einer Spannungsregelung einer Windenergieanlage mit einer Regelvorrichtung 51, von der wenigstens einige Teile oder ein Teil mit einer USV 52 mit Spannung sicher versorgt wird, wobei auch ein entsprechender Überspannungsschutz dann gegeben ist. Als Eingangsgrößen dienen für die Regelvorrichtung 51 ein vorgebbares Wirkleistungsmaximum 70, ein Blindleistungssollwert 71 und ein Spannungssollwert 72. Der Spannungssollwert 72 wird mit einer Ausgangsspannung U verglichen. Der Differenzbetrag bzw. der Vergleichsbetrag wird einem Spannungsregler 73 zugeführt und führt zu einer geregelten Spannung, die zusammen mit einem Vergleich der aus der Spannung und dem Strom in einer Blindleistungsberechnung 78 berechneten Blindleistung und dem Blindleistungssollwert zu einem Regelparameter für die Blindleistungsregelung 74 führt, die eine Eingangsgröße für das Vorgabemodul 77 ist. Auf der anderen Seite dient die maximal vorgegebene Leistung 70 als Vergleichsgröße zu einer aus dem abgegebenen Strom oder der abgegebenen Spannung in der Wirkleistungsberechnung 76 berechneten Wirkleistung. Der Differenzwert hierzu wird einer Wirkleistungsregelung 75 zugeführt. Das Ergebnis hiervon dient auch als Eingangsgröße des Vorgabemoduls 77. Im Vorgabemodul 77 werden entsprechende Entkopplungsparameter, Begrenzungsparameter, Schaltvorgänge usw. berechnet und gesteuert. Der Ausgang der Regelvorrichtung 51 geht in einen Umrichter bzw. ein Umrichter-Generatorsystem 79. Ausgehend davon werden eine entsprechende Spannung und ein entsprechender Strom U und I abgegeben, und zwar in Richtung 80 zum Netz 31 bzw. zu einer Übergabestelle zum Netz 31.

Vorzugsweise wird für die Ermittlung des Zeitpunktes des Auslösens des Signals zur Trennung der Windenergieanlage vom Netz eine Überspannungsabschaltkurve vorgesehen, die vorzugsweise empirisch ermittelt wurde. Hierzu ist insbesondere vorzugsweise in einem Speicher der Regelvorrichtung bzw. eines Computers ein Modell in Form einer Datenbank hinterlegt, die für das Betreiben der Windenergieanlage und Teilen davon dient. Es ist insbesondere ein Kenndatenfeld für den Betrieb der Windenergieanlage im Überspannungsbereich vorgesehen, in dem insbesondere vorzugsweise auch wenigstens eine Reaktionszeit wenigstens eines Trennschalters Berücksichtigung findet. Damit weist das Betriebskenndatenfeld Betriebsrisikokenndaten auf, mittels der ein sicherer Betrieb der Windenergieanlage bei Überspannungen im Hochspannungsnetz ermöglicht ist. Damit kann die Windenergieanlage auch bei hohen Überspannungen weiterbetrieben werden, wobei Komponenten der Windenergieanlage vor Überspannung geschützt werden und wobei insbesondere nur wenige Komponenten für eine höhere Spannungsfestigkeit ausgelegt werden müssen. Außerdem wird die Windenergieanlage vor hohen mechanischen Belastungen bei so genannten "crowbar"-Zündungen bei Überspannungen geschützt, indem die Spannung am Generator abgesenkt wird.

### Bezugszeichenliste

- 1-9: Ort
- 10: Windenergieanlagenpark
- 15-19: Windenergieanlage
- 25-29: Rotor
- 30: Generator
- 31: Netz
- 32: Leistungsschalter
- 33: Schütz
- 34: Schalter
- 41: erste Spannungsfunktion
- 42: zweite Spannungsfunktion
- 50: Parkregelung
- 51: Regelvorrichtung
- 52: unterbrechungsfreie Stromversorgung (USV)
- 53: Umrichter
- 54: Rotorkreis
- 55: Statorkreis
- 56: Blindstromquelle
- 60: Widerstand
- 61: Spule
- 62: Kondensator
- 63: Stufentransformator
- 64: Sollwertvorgabe
- 64': Sollwertvorgabe
- 65: Dreiwicklertransformator
- 66: Turmfuß
- 70: Wirkleistungsmaximum
- 71: Blindleistungssollwert
- 72: Spannungssollwert
- 73: Spannungsregler
- 74: Blindleistungsregelung
- 75: Wirkleistungsregelung
- 76: Wirkleistungsberechnung
- 77: Vorgabemodul
- 78: Blindleistungsberechnung
- 79: Umrichter / Generator
- 80: zum Netz
- 81: Blindstromsollwert
- 82: erste Blindstromistwertkurve
- 83: zweite Blindstromistwertkurve
- t: Zeit
- P: Wirkleistung
- Q: Blindleistung
- U: Spannung
- I: Strom
- Ib: Blindstrom
- Ipₙ: Nennblindstrom
- phi: Phase
- Uₙ: Nennspannung

## Patentansprüche

1. Verfahren zum Betreiben einer Windenergieanlage (15-19) mit einem von einem Rotor (25-29) angetriebenen elektrischen Generator (30) zum Abgeben elektrischer Leistung an ein elektrisches Netz (31), das eine Netzspannung vorsieht, wobei bei Vorherrschen einer Überspannung im Netz (31) Blindleistung von der Windenergieanlage (15-19) in das Netz (31) eingespeist wird, um eine Spannung zu senken, **dadurch gekennzeichnet, dass** überwacht wird, ob innerhalb einer vorgebbaren Zeit die Spannung auf einen vorgebbaren Sollwert gesenkt wurde und/oder ein Blindstrom abgegeben wird, der größer oder gleich einem vorgebbaren Blindstromsollwert ist, wobei eine erste Grenzfunktion (42) von vorgegebenen Spannungssollwerten in Abhängigkeit der Zeit (t) und/oder eine zweite Grenzfunktion von vorgegebenen induktiven Blindstromsollwerten in Abhängigkeit der Zeit (t) vorgesehen ist.

2. Verfahren nach Anspruch 1, **dadurch gekennzeichnet, dass** erst bei Überschreiten eines vorgebbaren Überspannungsbereichs Blindleistung in das Netz (31) eingespeist wird, wobei insbesondere für den Fall, dass der vorgebbare Spannungssollwert und/oder der vorgebbare Blindstromsollwert nicht erreicht wurde, ein Signal zur Trennung der Windenergieanlage (15-19) vom Netz (31) ausgelöst wird.

3. Verfahren nach Anspruch 1 oder 2, **dadurch gekennzeichnet, dass** so lange kein Signal zur Trennung der Windenergieanlage (15-19) vom Netz (31) ausgelöst wird, wie die Spannung unterhalb der ersten Grenzfunktion (42) bleibt und/oder der Blindstrom oberhalb der zweiten Grenzfunktion bleibt.

4. Verfahren nach einem der Ansprüche 1 bis 3, **dadurch gekennzeichnet, dass** eine Spannungsregelung und/oder Blindstromregelung vorgesehen ist.

5. Verfahren nach einem der Ansprüche 2 bis 4, **dadurch gekennzeichnet, dass** der Zeitpunkt des Auslösens des Signals der Trennung der Windenergieanlage (15-19) vom Netz (31) abhängig von einer Reaktionszeit eines Trennschalters (32, 33) ist.

6. Verfahren nach einem der Ansprüche 1 bis 5, **dadurch gekennzeichnet, dass** die Überwachung fortgeführt wird, wenn der vorgebbare Spannungssollwert und/oder der vorgebbare Blindstromsollwert erreicht wurde und insbesondere wenn eine Nennspannung im Netz (31) vorherrscht, wobei insbesondere über die vorgebbare Zeit hinaus weiter Blindleistung in das Netz (31) eingespeist wird, bis die Spannung einen weiteren vorgebbaren Wert erreicht, wobei insbesondere bei Erreichen des weiteren vorgebbaren Wertes der Spannung die Blindleistungsabgabe derart reduziert wird, dass der weitere vorgebbare Wert der Spannung nicht überschritten wird.

7. Verfahren nach einem der Ansprüche 1 bis 6, **dadurch gekennzeichnet, dass** wenigstens eine elektrische Komponente (34, 50, 51) der Windenergieanlage (15-19) und/oder eines Windparks (10) bei einer vorgebbaren Übersprechspannung einer Überspannung des Netzes (31) keine Schalthandlungen durchführt und/oder Schalthandlungen einstellt, wobei insbesondere wenigstens eine elektrische Komponente (34, 50, 51) der Windenergieanlage einer vorgebbaren Übersprechspannung einer Überspannung des Netzes (31) auch nicht kurzzeitig ausgesetzt werden darf und/oder wenigstens eine elektrische Komponente (34, 50, 51), die einen Schaltvorgang vornimmt und für die Überspannung oder Übersprechspannung nicht ausgelegt ist, von einer unterbrechungsfreien Stromversorgung (52) versorgt wird, wobei insbesondere das Verfahren für eine maximal vorgebbare Zeitdauer durchgeführt wird.

8. Verfahren zum Betreiben eines Windenergieanlagenparks mit wenigstens zwei Windenergieanlagen (15-19), wobei ein Verfahren nach einem der Ansprüche 1 bis 7 ausgeführt wird, wobei insbesondere eine Parkregelung (50) eine Parkblindstromquelle (56) steuert.

9. Windenergieanlage (15-19) mit einem von einem Rotor (25-29) angetriebenen elektrischen Generator (30) zum Abgeben elektrischer Leistung an ein elektrisches Netz (31), wobei bei Vorherrschen einer Überspannung im Netz Blindleistung von der Windenergieanlage (15-19) in das Netz (31) eingespeist wird , um eine Spannung zu senken, **dadurch gekennzeichnet, dass** eine Überwachungsvorrichtung (50, 51) vorgesehen ist, die ausgebildet ist, um zu überwachen, ob innerhalb einer vorgebbaren Zeit die Spannung auf einen vorgebbaren Sollwert gesenkt wurde und/oder ein Blindstrom abgegeben wird, der größer oder gleich einem vorgebbaren Blindstromsollwert ist, wobei eine erste Grenzfunktion (42) von vorgegebenen Spannungssollwerten in Abhängigkeit der Zeit (t) und/oder eine zweite Grenzfunktion von vorgegebenen induktiven Blindstromsollwerten in Abhängigkeit der Zeit (t) vorgesehen ist.

10. Windenergieanlage (15-19) nach Anspruch 9, **dadurch gekennzeichnet, dass** die Überwachungsvorrichtung (50, 51) derart ausgebildet ist, dass erst bei Überschreiten eines vorgebbaren Überspannungsbereichs Blindleistung in das Netz (31) eingespeist wird, wobei insbesondere die Überwachungsvorrichtung (50, 51) ein Signal zur Trennung der Windenergieanlage (15-19) vom Netz (31) auslöst, sofern der vorgebbare Spannungssollwert und/oder der vorgebbare Blindstromsollwert nicht erreicht wurde, wobei insbesondere eine Regelvorrichtung (51) vorgesehen ist, mit der eine Spannungsregelung und/oder eine Blindstromregelung ermöglicht ist.

11. Windenergieanlage (15-19) nach Anspruch 9 oder 10, **dadurch gekennzeichnet, dass** ein Umrichter (53) oder ein Umrichter- und Generatorsystem (30, 53) vorgesehen ist, der
oder das zum Absenken der Spannung einen Blindstrom in das Netz (31) einspeist, wobei insbesondere eine unterbrechungsfreie Stromversorgung (52) vorgesehen ist, die wenigstens ein empfindliches elektrisches Gerät (50, 51) oder eine empfindliche elektrische Komponente (34) vor Überspannung schützt, wobei insbesondere der Rotorkreis (54) und/oder Statorkreis (55) mit einem für Überspannungen ausgelegten Leistungsschalter (32) oder Schütz (33) ausgebildet sind, wobei insbesondere getrennte Schalter (32, 33, 34) für Rotorkreis (54) und Statorkreis (55) vorgesehen sind.

12. Windenergieanlage (15-19) nach einem der Ansprüche 9 bis 11, **dadurch gekennzeichnet, dass** der Generator (30) ein doppelt gespeister Asynchrongenerator ist, wobei insbesondere der Umrichter (53) ein Zwischenkreisumrichter ist, wobei insbesondere der Zwischenkreisumrichter (53) wenigstens einen schaltbaren Widerstand in einem Zwischenkreis und/oder an einer elektrischen Verbindung zum Generator (30) aufweist und der Widerstand aktiviert wird, wenn die Leistung, die anliegende Spannung und/oder der Strom, der den Umrichter (53) durchfließt, einen jeweils vorgebbaren Grenzwert erreicht.

13. Windenergieanlagenpark (10) mit wenigstens zwei Windenergieanlagen (15-19) nach einem der Ansprüche 9 bis 12.

14. Windenergieanlagenpark (10) nach Anspruch 13, **dadurch gekennzeichnet, dass** eine von den Windenergieanlagen (15-19) beabstandete Parkblindstromquelle (56) vorgesehen ist.

## Claims

1. A method of operating a wind power system (15-19) including an electric generator (30), driven by a rotor (25-29), for supplying electric power to an electric network (31), which provides a network voltage, wherein, when an overvoltage prevails in the network (31), reactive power is fed by the wind power system (15-19) into the network in order to reduce a voltage, **characterised in that** it is monitored whether, within a predeterminable time, the voltage is reduced to a predeterminable desired value and/or a reactive current is supplied, which is greater than or equal to a predeterminable reactive current desired value, wherein a first boundary function (42) is provided from predetermined voltage desired values in dependence on the time (t) and/or a second boundary function is provided from predetermined inductive reactive current desired values in dependence on the time (t).

2. A method as claimed in Claim 1, **characterised in that** reactive power is only fed into the network (31) when a predeterminable overvoltage range is exceeded, wherein, particularly in the event that the predeterminable voltage desired value and/or the predeterminable reactive current desired value is not reached, a signal for disconnecting the wind power system (15-19) from the network (31) is triggered.

3. A method as claimed in Claim 1 or 2, **characterised in that** no signal for disconnecting the wind power system (15-19) from the network (31) is triggered so long as the voltage remains below the first bounday function (42) and/or the reactive current remains above the second boundary function.

4. A method as claimed in one of Claims 1 to 3, **characterised in that** a voltage controller and/or a reactive current controller is provided.

5. A method as claimed in one of Claims 2 to 4, **characterised in that** the time at which the signal for disconnecting the wind power system (15-19) from the network (31) is triggered is dependent on a reaction time of a disconnection switch (32, 33).

6. A method as claimed in one of Claims 1 to 5, **characterised in that** the monitoring process is continued when the predeterminable voltage desired value and/or the predeterminable reactive current value is reached and particularly when a nominal voltage prevails in the network (31), wherein, particularly after the predeterminable time, further reactive power is fed into the network (31) until the voltage reaches a further predeterminable value, wherein, particularly when the further predeterminable value of the voltage is reached, the reactive power supply is reduced so that the further predeterminable value of the voltage is not exceeded.

7. A method as claimed in one of Claims 1 to 6, **characterised in that** at least one electrical component (34, 50, 51) of the wind power system (15-19) and/or of a wind farm (10) performs no switching operations and/or ceases switching operations at a predeterminable excess voltage of an overvoltage of the network (31), wherein, in particular, at least one electrical component (34, 50, 51) of the wind power system may not be subjected to a predeterminable excess voltage of a voltage of the network (31) even briefly and/or at least one electrical component (34, 50, 51) which effects a switching process and is not designed for the overvoltage or excess voltage, is supplied by an uninterruptible power supply (52), wherein, in particular, the method is performed for a maximum predeterminable period of time.

8. A method of operating a wind power farm with at least two wind power systems (15-19), wherein a method as claimed in one of Claims 1 to 7 is performed, wherein, in particular, a farm controller (50) controls a farm reaction current source (56).

9. A wind power system (15-19) including an electrical generator (30), which is driven by a rotor (25-29), for supplying electrical power to an electrical network (31), wherein, when an overvoltage prevails in the network, reactive power is fed from the wind power system (15-19) into the network (31) in order to reduce a voltage, **characterised in that** a monitoring device (50, 51) is provided, which is constructed to monitor whether the voltage has reduced within a predeterminable time to a predeterminable desired value and/or a reactive current is supplied which is greater than or equal to a predeterminable reactive current desired value, wherein a first boundary function (42) is provided from predetermined voltage desired values in dependence on the time (t) and/or a second boundary function is provided from predetermined inductive reactive current desired values in dependence on the time (t).

10. A wind power system (15-19) as claimed in Claim 9, **characterised in that** the monitoring device (50, 51) is so constructed that reactive power is fed into the network (31) only when a predeterminable overvoltage range is exceeded, wherein, in particular, the monitoring device (50, 51) triggers a signal for disconnecting the wind power system (15-19) from the network (31) if the predeterminable voltage desired value and/or the predeterminable reactive current desired value has not been reached, wherein, in particular, a control device (51) is provided, with which voltage control and/or reactive current control is rendered possible.

11. A wind power system (15-19) as claimed in Claim 9 or 10, **characterised in that** a inverter (53) or an inverter and generator system (30, 53) is provided, which feeds a reactive current into the network (3 1) in order to reduce the voltage, wherein, in particular, an uninterruptible power supply (52) is provided, which protects at least one sensitive electrical device (50, 51) or a sensitive electrical component (34) from overvoltage, wherein, in particular, the rotor circuit (54) and/or stator circular (55) is constructed with a power switch (32) or contactor (33) designed for overvoltages, wherein, in particular, separate switches (32, 33, 34) are provided for the rotor circuit (54) and stator circuit (55).

12. A wind power system (15-19) as claimed in one of Claims 9 to 11, **characterised in that** the generator (30) is a double-fed asynchronous generator, wherein, in particular, the inverter (53) is an indirect inverter, wherein, in particular, the indirect inverter (53) has at least one switchable resistor in an intermediate circuit and/or on an electrical connection to the generator (30) and the resistor is activated when the power, the applied voltage and/or the current, which flows through the inverter (53), reaches a respective predeterminable boundary value.

13. A wind power farm (10) including at least two wind power systems (15-19) as claimed in one of Claims 9 to 12.

14. A wind power system farm (10) as claimed in Claim 13, **characterised in that** a farm reactive current source (56) is provided spaced from the wind power systems (15-19).

## Revendications

1. Procédé pour faire fonctionner une installation éolienne (15-19) avec un générateur (30) électrique entraîné par un rotor (25-29) pour délivrer de la puissance électrique à un réseau (31) électrique, qui prévoit une tension du réseau, dans lequel, lorsqu'il prédomine une surtension dans le réseau (31), de la puissance réactive est injectée par l'installation éolienne (15-19) dans le réseau (31) pour abaisser une tension, **caractérisé en ce qu'**on vérifie si, en l'espace d'un temps prédéfinissable, la tension a été abaissée jusqu'à une valeur de consigne prédéfinissable et/ou s'il est délivré un courant réactif qui est supérieur ou égal à une valeur de consigne de courant réactif prédéfinissable, une première fonction limite (42) de valeurs de consigne de tension prédéfinissables étant prévue en fonction du temps (t) et/ou une seconde fonction limite de valeurs de consigne de courant réactif inductives prédéterminées étant prévue en fonction du temps (t).

2. Procédé selon la revendication 1, **caractérisé en ce que** de la puissance réactive est injectée dans le réseau (31) uniquement en cas de dépassement d'une plage de surtension prédéfinissable, sachant que, en particulier dans le cas où la valeur de consigne de tension prédéfinissable et/ou la valeur de consigne de courant réactif prédéfinissable n'a pas été atteinte, un signal est déclenché pour la séparation de l'installation éolienne (15-19) du réseau (31).

3. Procédé selon la revendication 1 ou 2, **caractérisé en ce qu'**aucun signal pour la séparation de l'installation éolienne (15-19) du réseau (31) est déclenché aussi longtemps que la tension reste au-dessous de la première fonction limite (42) et/ou que le courant réactif reste au-dessus de la seconde fonction limite.

4. Procédé selon l'une quelconque des revendications 1 à 3, **caractérisé en ce qu'**un réglage de tension et/ou un réglage de courant réactif est prévu.

5. Procédé selon l'une quelconque des revendications 2 à 4, **caractérisé en ce que** le moment du déclenchement du signal pour la séparation de l'installation éolienne (15-19) du réseau (31) est dépendant d'un temps de réaction d'un sectionneur (32, 33).

6. Procédé selon l'une quelconque des revendications 1 à 5, **caractérisé en ce que** le contrôle est poursuivi lorsque la valeur de consigne de tension prédéfinissable et/ou la valeur de consigne de courant réactif prédéfinissable a été atteinte et en particulier lorsqu'une tension nominale prédomine dans le réseau (31), de la puissance réactive étant injectée dans le réseau (31) en particulier au-delà du temps prédéfinissable jusqu'à ce que la tension atteigne une autre valeur prédéfinissable, la délivrance de puissance réactive étant réduite, en particulier lorsque l'une autre valeur prédéfinissable de la tension est atteinte, de telle sorte que l'autre valeur prédéfinissable de la tension n'est pas dépassée.

7. Procédé selon l'une quelconque des revendications 1 à 6, **caractérisé en ce qu'**au moins un composant (34, 50, 51) électrique de l'installation éolienne (15-19) et/ou d'un parc éolien (10) n'effectue pas d'actes de commutation et/ou interrompt des actes de commutation dans le cas d'une tension diaphonique prédéfinissable d'une surtension du réseau (31), dans lequel en particulier au moins un composant (34, 50, 51) électrique de l'installation éolienne ne doit pas être exposé même pendant un court instant à une tension diaphonique prédéfinissable d'une surtension du réseau (31) et/ou au moins un composant électrique (34, 50, 51), qui effectue une opération de commutation et n'est pas conçu pour la surtension ou la tension diaphonique, est alimenté par une alimentation électrique (52) sans interruption, en particulier le procédé étant mis en oeuvre pour une durée maximale prédéfinissable.

8. Procédé pour exploiter un parc d'installations éoliennes comprenant au moins deux installations éoliennes (15-19), un procédé étant mis en oeuvre selon l'une quelconque des revendications 1 à 7, en particulier un réglage du parc (50) commandant une source de courant réactif du parc (56).

9. Installation éolienne (15-19) dotée d'un générateur (30) électrique entraîné par un rotor (25-29) pour délivrer de la puissance électrique à un réseau (31) électrique, sur laquelle de la puissance réactive est injectée par l'installation éolienne (15-19) dans le réseau (31) lorsqu'une surtension prédomine dans le réseau, afin de réduire une tension, **caractérisée en ce qu'**un dispositif de contrôle (50, 51) est prévu, lequel est conçu pour vérifier si, en l'espace d'un laps de temps prédéfinissable, la tension a été réduite jusqu'à une valeur de consigne prédéfinissable et/ou il est délivré un courant réactif, qui est supérieur ou égal à une valeur de consigne de courant réactif prédéfinissable, une première fonction limite (42) de valeurs de consigne de tension prédéfinissables étant prévue en fonction du temps (t) et/ou une seconde fonction limite de valeurs de consigne de courant réactif inductives prédéfinies étant prévue en fonction du temps (t).

10. Installation éolienne (15-19) selon la revendication 9, **caractérisée en ce que** le dispositif de contrôle (50, 51) est conçu de telle sorte que de la puissance réactive est injectée dans le réseau (31) en cas de dépassement d'une plage de surtension prédéfinissable, en particulier le dispositif de contrôle (50, 51) déclenchant un signal pour la séparation de l'installation éolienne (15-19) du réseau (31) dans la mesure où la valeur de consigne de tension prédéfinissable et/ou la valeur de consigne de courant réactif prédéfinissable n'a pas été atteinte, en particulier un dispositif de réglage (51) étant prévu, avec lequel un réglage de tension et/ou un réglage de courant réactif est rendu possible.

11. Installation éolienne (15-19) selon la revendication 9 ou 10, **caractérisée en ce qu'**un convertisseur (53) ou un système convertisseur et générateur (30, 53) est prévu, lequel injecte un courant réactif dans le réseau (31) pour abaisser la tension, en particulier une alimentation électrique (52) interrompue étant prévue, laquelle protège au moins un appareil (50, 51) électrique sensible ou un composant (34) électrique sensible de la surtension, en particulier le circuit rotor (54) et/ou le circuit stator (55) étant conçu avec un interrupteur de puissance (32) ou un contacteur (33) conçu pour des surtensions, en particulier des interrupteurs (32, 33, 34) séparés étant prévus pour le circuit rotor (54) et le circuit stator (55).

12. Installation éolienne (15-19) selon l'une quelconque des revendications 9 à 11, **caractérisée en ce que** le générateur (30) est un générateur asynchrone à double alimentation, en particulier le convertisseur (53) étant un convertisseur à circuit intermédiaire, en particulier le convertisseur à circuit intermédiaire (53) présentant au moins une résistance commutable dans un circuit intermédiaire et/ou sur une liaison électrique avec le générateur (30) et la résistance étant activée lorsque la puissance, la tension appliquée et/ou le courant, qui traverse le convertisseur (53), atteignent une valeur limite respectivement prédéfinissable.

13. Parc d'installations éoliennes (10) comprenant au moins deux installations éoliennes (15-19) selon l'une quelconque des revendications 9 à 12.

14. Parc d'installations éoliennes (10) selon la revendication 13, **caractérisé en ce qu'**une source de courant réactif de parc (56) espacée des installations éoliennes (15-19) est prévue.
